# EUROPÄISCHE PATENTSCHRIFT

(11) **EP 4 096 965 B1**
(45) Veröffentlichungstag und Bekanntmachung des Hinweises auf die Patenterteilung: **11.03.2026**
(21) Anmeldenummer: 21700846.5
(22) Anmeldetag: 11.01.2021
(51) Int. Cl.: B60Q 1/52, B60Q 3/80, B60Q 1/46

(54) **VERFAHREN ZUR ABGABE EINES HILFESIGNALS**
METHOD FOR EMITTING AN ASSISTANCE SIGNAL
PROCÉDÉ D'ÉMISSION D'UN SIGNAL D'ASSISTANCE

(30) Priorität: 31.01.2020 DE 102020201208
(43) Veröffentlichungstag der Anmeldung: 07.12.2022
(73) Patentinhaber: VOLKSWAGEN AKTIENGESELLSCHAFT, 38440 Wolfsburg (DE)
(72) Erfinder: ABROLAT, Jan Christoph, 44866 Bochum (DE); KLÖREN, Sven, 40822 Mettmann (DE)
(86) Internationale Anmeldenummer: PCT/EP2021/050398
(87) Internationale Veröffentlichungsnummer: WO 2021/151644

(56) Entgegenhaltungen:
- DE-A1- 102005 053 883
- DE-A1- 102008 005 621
- DE-A1- 102012 018 520
- DE-A1- 102013 018 784
- DE-A1- 4 300 578
- DE-C1- 19 511 388
- DE-U1- 29 700 652
- US-A- 6 166 656

## Beschreibung

Die vorliegende Erfindung betrifft ein Verfahren zur Abgabe eines Hilfesignals mit der Beleuchtungseinrichtung eines Beförderungsmittels, das eine Beleuchtungssteuerung, eine Einrichtung zur Erkennung einer Notfallsituation und eine Triggervorrichtung aufweist, die nach einer registrierten Notfallsituation ein Triggersignal erzeugt, wobei die Beleuchtungssteuerung nach dem Empfang des Triggersignals die Beleuchtungseinrichtung derart steuert, dass die Beleuchtungseinrichtung in Form eines Notfallsignals blinkt, wobei die Beleuchtungseinrichtung des Beförderungsmittels eine Innenbeleuchtung und eine Außenbeleuchtung aufweist, die jeweils mehrere Beleuchtungselemente besitzen.

Nach dem Stand der Technik sind unterschiedliche Verfahren und Vorrichtungen bekannt, wie in Notfallsituationen, insbesondere im Straßenverkehr, Hilfe angefordert werden kann. Beispielsweise sind Kraftfahrzeuge bekannt, die eine Notrufbox (CCU) besitzen, die automatisch durch Crash-Signale getriggerte Notrufe absetzen. Dabei verbindet sich das Kraftfahrzeug mit einer externen Notrufannahmestelle, übermittelt alle wesentlichen Angaben zum Ort der Notfallsituation und informiert die Insassen per Sprach- oder Displayanzeige über die in die Wege geleiteten Schritte. Professionelle Rettungskräfte treffen jedoch regelmäßig erst nach einer gewissen Zeit am Unfallort ein. Insbesondere bei lebensbedrohlichen Verletzungen der Insassen sind jedoch rasche Erste-Hilfe-Maßnahmen erforderlich, um die Überlebenschancen zu erhöhen, wozu regelmäßig Hilfe von Beobachtern des Unfalls beansprucht wird. In Fällen, in denen Unfälle aber ohne die Beteiligung Dritter passieren oder in Fällen, in denen die verunfallten Fahrzeuge unentdeckt bleiben, vergehen wertvolle Minuten, bis die automatisch angeforderten Rettungskräfte eintreffen.

Gattungsgemäße Verfahren sind aus DE 19908283 A1, US 6 166 656 A und DE 102012018520 A1 bekannt.

Ferner ist aus DE 102015004504 A1 ein Verfahren bekannt, Elemente der Fahrzeugaußenbeleuchtung, beispielsweise die Warnblinkanlage, zur Abgabe eines optischen Hilfesignals anzusteuern.

Weitere Fahrzeuge mit einer Außenbeleuchtung und/oder einer Innenbeleuchtung sind in DE 4300578 A1, DE 29700652 U1, DE 102013018784 A1, DE 102005053883 A1, DE 19511388 C1 und DE 102008005621 A1 beschrieben.

Hiervon ausgehend ist es die Aufgabe der vorliegenden Erfindung, ein Verfahren zur Abgabe eines Hilfesignals zu schaffen, das unmittelbar am Unfallort eine rasche Hilfestellung durch potenzielle Ersthelfer ermöglicht.

Diese Aufgabe wird durch das Verfahren nach Anspruch 1 gelöst. Erfindungsgemäß ist vorgesehen, dass zur Abgabe des Notfallsignals alle oder nur eine Teilmenge der Außenbeleuchtungselemente und alle oder nur eine Teilmenge der Innenbeleuchtungselemente angesteuert wird, wobei bei der Abgabe des Notfallsignals alle blinkenden Beleuchtungselemente der Beleuchtungseinrichtung synchron blinken. Vorzugsweise blinkt die Beleuchtungseinrichtung dabei in Form des allgemein bekannten Morsecodes für SOS **(•••** - - - **•••**). Hierdurch werden Passanten eindeutig auf den vorhandenen Notfall aufmerksam gemacht, so dass situationsabhängig Erste-Hilfe-Maßnahmen eingeleitet werden können. Die vorliegende Erfindung ist insbesondere deswegen vorteilhaft, weil die abgegebenen Blinkmuster einen eindeutigen Hinweis auf die gegebene Notfallsituation erzeugen und daher nicht mit einer herkömmlichen Warnblinkanlage, einer Alarmanlage oder sonstigen Zeichen verwechselt werden können. Ferner wird auch auf Unfallstellen hingewiesen, die abseits der Straße sind, wie beispielsweise im Wald oder innerhalb tiefer Wassergräben, die ohne optisch erkennbare Hilfesignale nicht ohne Weiteres auffindbar sind oder erkannt werden. Durch das synchrone Blinken, wird die Eindeutigkeit des Notfallsignals erhöht.

Weitere bevorzugte Ausführungsformen der vorliegenden Erfindung werden nachfolgend und in den Unteransprüchen angegeben.

Nach einer ersten vorteilhaften Ausgestaltung der Erfindung ist vorgesehen, dass das Beförderungsmittel ein Kraftfahrzeug, insbesondere ein Personenkraftwagen (PKW), ein Bus, ein Lastkraftwagen (LKW), ein Zug, ein Schiff, ein Flugzeug oder ein Hubschrauber ist. Die Erfindung ist daher nicht auf Beförderungsmittel im Straßenverkehr beschränkt und erstreckt sich vielmehr auf alle Bereiche, bei denen Personen oder Tiere mit sich bewegenden Beförderungsmitteln transportiert werden.

Die Beleuchtungseinrichtung des Beförderungsmittels weist eine Innenbeleuchtung und eine Außenbeleuchtung auf, die jeweils mehrere Beleuchtungselemente besitzen. Die Außenbeleuchtung weist insbesondere Blinker, Abblendlicht, Fernlicht, Bremslicht, Seiten- und Begrenzungsleuchten, Rückfahrscheinwerfer, Nebelscheinwerfer, Nebelschlussleuchte, Standlicht, Tagfahrlicht, Kurvenlicht, und/oder Kennzeichenbeleuchtung auf, während die Innenbeleuchtung insbesondere eine Innenraumbeleuchtung, eine Ambientebeleuchtung, eine Instrumentenbeleuchtung und/oder ein Infotainmentdisplay besitzt.

Bei einer etwa vorhandenen mehrfarbigen Ambientebeleuchtung ist nach einer bevorzugten Ausgestaltung der Erfindung vorgesehen, dass die Ambientebeleuchtung rot oder in einer sonstigen Warnfarbe blinkt.

Sofern der Blinker als eines der angesteuerten Beleuchtungselemente das Notfallsignal abgibt, ist nach einer bevorzugten Ausgestaltung der Erfindung vorgesehen, dass Klickgeräusche des Blinkers (der sog. Kontrollton) während des Notfallsignals entweder mit der normalen und nicht morsecodierten Frequenz weiterläuft oder ausgeblendet wird, weil die vergleichsweise leisen Klickgeräusche im Morsecode nicht geeignet sind, um externe Hilfe anzufordern und im Notfall die verunfallten Insassen eher stören.

Sofern das Fernlicht als ein Beleuchtungselement zur Erzeugung des Notfallsignals angesteuert wird, ist nach einer bevorzugten Ausgestaltung der Erfindung vorgesehen, dass eine Fernlichtsteuerung die Abgabe des Notfallsignals mittels des Fernlichts blockiert, wenn ein sich näherndes Fahrzeug registriert wird. Hierdurch wird verhindert, dass Fahrer von sich nähernden Fahrzeugen durch das helle Fernlicht geblendet werden. Sollte sich kein Fahrzeug mehr in dem relevanten Bereich befinden, kann das Fernlicht durch die Fernlichtsteuerung wieder angeschaltet werden, womit das Fernlicht zur Erzeugung des Notfallsignals weiterhin beiträgt.

Nach einer vorteilhaften Ausgestaltung der Erfindung ist vorgesehen, dass vor der Abgabe des Hilfesignals eine beförderungsmittelinterne Warnmeldung abgegeben wird, die dem Fahrer die bevorstehende Abgabe des Hilfesignals anzeigt, wobei der Fahrer mittels einer Eingabevorrichtung die Abgabe des Hilfesignals freigeben oder blockieren kann. Die Warnmeldung kann akustisch und/oder optisch am HMI (Human Maschine Interface) oder am ABT (Anzeige-Bedienteil) angezeigt werden. Die Bestätigung oder Blockierung des Hilfesignals kann über Softkeys oder sonstige Schalter erfolgen, die am HMI/ABT dargestellt oder angeordnet sind. Unterbleibt eine Reaktion des Fahrers, ist vorzugsweise vorgesehen, dass das Hilfesignal sofort oder mit einer Verzögerung von wenigen Sekunden, beispielsweise von weniger als 5 sec, aktiviert wird. Es ist auch vorgesehen, dass die Abgabe des Hilfesignals aktiv abgebrochen werden kann, sofern die vorhandene Notfallsituation nicht mehr gegeben ist. Insbesondere das HMI/ABT weisen hierfür mechanische Tasten, Softkeys oder sonstige Eingabemittel auf.

Ferner ist nach einer bevorzugten Ausführungsform der Erfindung vorgesehen, dass die Triggervorrichtung zur Erzeugung des Triggersignals mit einer Auslösevorrichtung eines Rückhaltesystems und/oder dem Emergency-Assist-System des Beförderungsmittels und/oder einem eCall (emergency call) gekoppelt ist. Beispielsweise wird das Triggersignal durch ein Airbag-Steuersystem erzeugt, dass Sensoren zur Unfallerkennung besitzt. Insbesondere sind Beschleunigungssensoren vorgesehen, die ein Crash-Signal erzeugen, die Crash-Stärke ermitteln und etwaige Überschläge (sog. Rollover) erkennen. Alternativ und/oder additiv ist vorgesehen, einen von einem Emergency-Assist durchgeführten Nothalt des Beförderungsmittels als Triggersignal zur Auslösung des Hilfssignals zu definieren, wobei der Nothalt vom Emergency-Assist durchgeführt wird, wenn der Fahrer während der Fahrt ein Stoppsignal initiiert, oder vom System eine schlaf- oder ohnmachtsbedingte Nichtreaktion des Fahrers registriert wird. Dabei ist vorzugsweise vorgesehen, dass das Hilfesignal erst dann abgegeben wird, wenn das Fahrzeug vollständig zum Stillstand gelangt ist. Als weiteres Triggersignal ist die Abgabe eines manuell ausgelösten eCalls vorgesehen. Hierbei erscheint regelmäßig ein Bestätigungsfenster am HMI/ABT, das in bereits beschriebener Weise eine Eingabe in Form einer Taste oder eines Softkeys zum Starten des Hilfesignals aufweisen kann. Schließlich ist nach einer bevorzugten Ausgestaltung der Erfindung vorgesehen, dass das Notfallsignal in Form des SOS-Blinkens der Beleuchtungseinrichtung durch ein SOS-Hupen ergänzt wird, das vorzugsweise synchron zum optischen Notfallsignal abgegeben wird. In diesem Fall besteht das Hilfesignal aus dem optisch erkennbaren Notfallsignal und dem Hupen. Vorzugsweise ist vorgesehen, dass über eine Bestätigungsanzeige auswählbar ist, ob das optische Notfallsignal alleine, das SOS-Hupen alleine oder beide Signale gemeinsam in Kombination abgegeben werden sollen.

Weitere bevorzugte Ausführungsformen und konkrete Ausführungsformen der vorliegenden Erfindung werden nachfolgend und mit Bezug auf die Figuren erläutert. Es zeigen:
- Fig. 1: ein Kraftfahrzeug mit einer Einrichtung zur Durchführung des Verfahrens,
- Fig. 2: eine Fahrzeugvernetzung und
- Fig. 3: ein Flussdiagramm mit einem möglichen Verfahrensablauf.

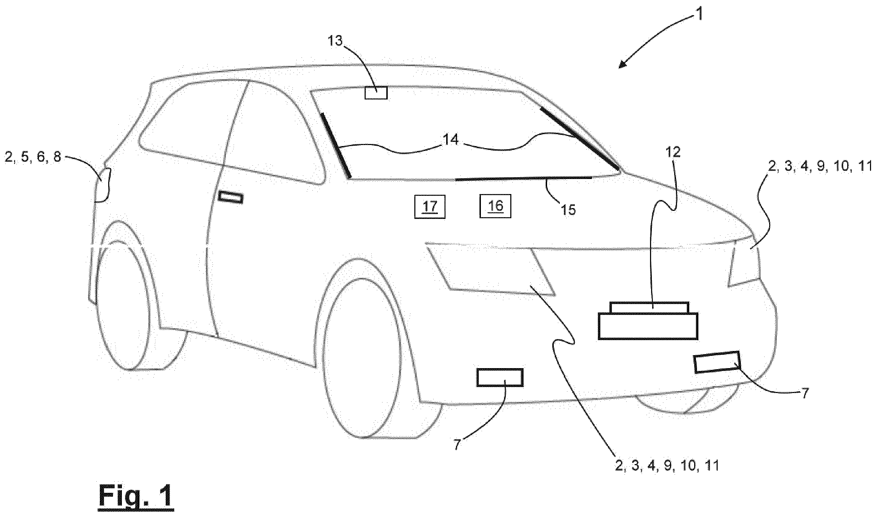

Fig. 1 zeigt ein Beförderungsmittel in Form eines Kraftfahrzeugs 1, das eingerichtet ist, um mittels einer Beleuchtungseinrichtung ein Hilfesignal abzugeben. Hierzu weist die Beleuchtungseinrichtung eine Außenbeleuchtung mit mehreren Außenbeleuchtungselementen und eine Innenbeleuchtung mit mehreren Innenbeleuchtungselementen auf. Konkret umfasst die Außenbeleuchtung Blinker 2 (vorne und hinten), Abblendlicht 3, Fernlicht 4, Bremslicht 5, Rückfahrscheinwerfer 6, Nebelscheinwerfer 7, Nebelschlussleuchte 8, Standlicht 9, Tagfahrlicht 10, Kurvenlicht 11 und Kennzeichenbeleuchtung 12. Die Innenbeleuchtung weist eine Innenraumbeleuchtung 13, Ambientebeleuchtung 14, ein (nicht beziffertes) Infotainmentdisplay und Instrumentenbeleuchtung 15 auf. Zur Steuerung der einzelnen Beleuchtungselemente der Außen- und Innenbeleuchtung ist eine Beleuchtungssteuerung 16 vorgesehen, die nach dem Empfang eines von einer Triggervorrichtung 17 erzeugten Triggersignals die Beleuchtungseinrichtung derart steuert, dass die Beleuchtungseinrichtung in Form eines SOS-Signals blinkt.

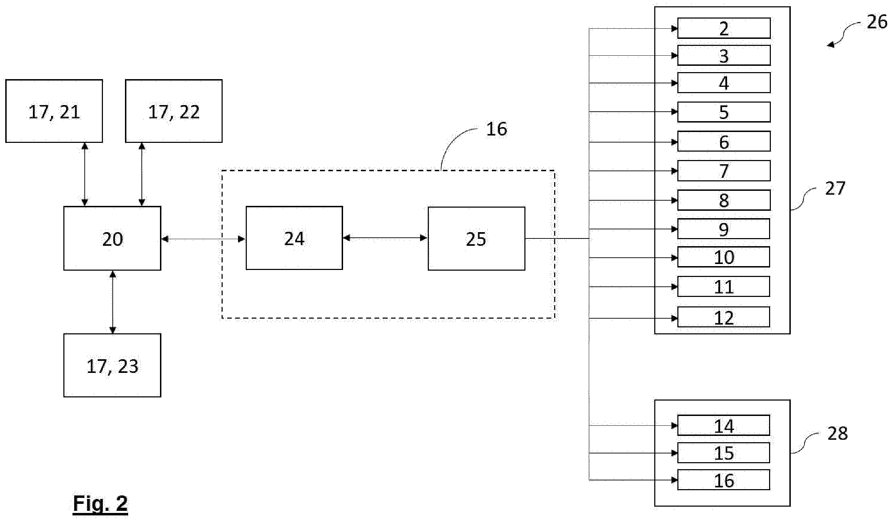

Fig. 2 zeigt eine optionale Fahrzeugvernetzung, die zur Durchführung des Verfahrens ausgebildet ist. Hierzu ist eine zentrale Steuereinheit 20 vorgesehen, die mit mehreren Triggervorrichtungen 17 verbunden ist. Zunächst ist die zentrale Steuereinheit 20 mit dem Airbagsteuergerät 21 verbunden, das im Falle eines Unfalls ein Triggersignal zur Erzeugung des Hilfesignals abgibt. Ferner ist die zentrale Steuereinheit 20 mit einer Vorrichtung 22 zur Abgabe eines eCalls verbunden, wobei die automatische Abgabe eines eCalls als Auslöser für ein Triggersignal definiert ist. Schließlich ist die zentrale Steuereinheit 20 mit einem HMI 23 verbunden, über das ein Triggersignal zur Abgabe des Hilfesignals manuell eingegeben werden kann. Im dargestellten Ausführungsbeispiel ist die zentrale Steuereinheit 20 mittelbar über eine Beleuchtungssteuerung 16 mit einem Body-Control-Modul (BCM) 24 und einem oder mehreren Lichtsteuergeräten 25 mit der Beleuchtungseinrichtung 26 verbunden, die eine Außenbeleuchtung 27 und eine Innenbeleuchtung 28 aufweist. Die entsprechend zugewiesenen Beleuchtungselemente 2 bis 12 und 13 bis 15 werden in beschriebener Weise zur Abgabe des Notfallsignals angesteuert.

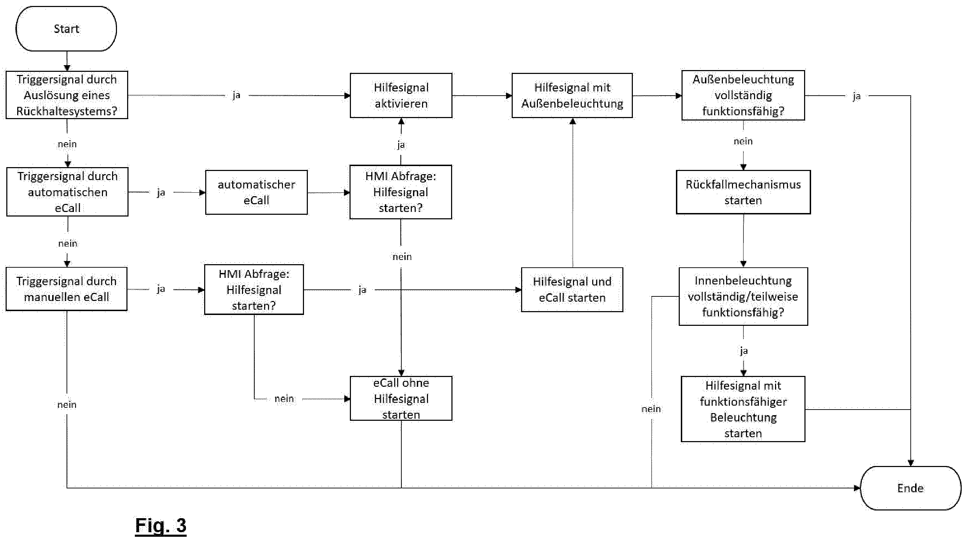

Fig. 3 zeigt ein Flussdiagramm einer bevorzugten Ausführungsform der vorliegenden Erfindung. Der Verfahrensablauf sieht folgendes vor.

Zunächst wird registriert, ob ein Triggersignal durch die Auslösung eines Rückhaltesystems erzeugt wurde. Wenn ja, wird das Hilfesignal aktiviert. Liegt kein Triggersignal durch die Auslösung eines Rückhaltesystems vor, wird festgestellt, ob ein Triggersignal durch einen automatischen eCall abgegeben wurde. Wenn ja, wird der automatische eCall abgegeben und am HMI wird der Fahrer gefragt, ob ergänzend das Hilfesignal gestartet werden soll. Wenn ja, wird das Hilfesignal aktiviert. Wenn nein, wird der eCall ohne die Aktivierung des Hilfesignals abgegeben.

Erfolgt das Triggersignal nicht durch einen automatischen eCall wird festgestellt, ob ein Triggersignal durch einen manuell aktivierten eCall vorliegt. Wenn ja, wird am HMI abgefragt, ob das Hilfesignal aktiviert werden soll. Wenn ja, wird das Hilfesignal aktiviert und ein eCall abgegeben. Wenn nein, wird ein eCall ohne die Aktivierung des Hilfesignals abgegeben.

Während des aktivierten Hilfesignals wird festgestellt, ob die Außenbeleuchtung, mit der das Hilfesignal vorzugsweise abgegeben wird, vollständig funktionsfähig ist. Wenn ja, bleibt es bei der Abgabe des Hilfesignals mittels der angesteuerten Teilmenge der Außenbeleuchtungselemente. Sofern die Außenbeleuchtung vollständig oder teilweise funktionsunfähig ist, wird ein Rückfallmechanismus gestartet, der in Abhängigkeit der Funktionsfähigkeit weiterer Außen- und Innenbeleuchtungselemente andere Beleuchtungselemente zur Abgabe des Hilfesignals ansteuert. Hierzu wird zunächst festgestellt, ob und ggf. welche Innenbeleuchtungselemente funktionsfähig sind. Sind keine Innenbeleuchtungselemente funktionsfähig, kann kein Hilfesignal hierüber abgegeben werden. Sind demgegenüber die Innenbeleuchtungselemente vollständig oder zumindest teilweise funktionsfähig, wird das Hilfesignal über die funktionsfähigen Beleuchtungselemente oder zumindest einer Teilmenge hiervon aktiviert.

### Bezugszeichenliste

- 1: Kraftfahrzeug
- 2: Blinker
- 3: Abblendlicht
- 4: Fernlicht
- 5: Bremslicht
- 6: Rückfahrscheinwerfer
- 7: Nebelscheinwerfer
- 8: Nebelschlussleuchte
- 9: Standlicht
- 10: Tagfahrlicht
- 11: Kurvenlicht
- 12: Kennzeichenbeleuchtung
- 13: Innenraumbeleuchtung
- 14: Ambientebeleuchtung
- 15: Instrumentenbeleuchtung
- 16: Beleuchtungssteuerung
- 17: Triggervorrichtung
- 20: zentrale Steuereinheit
- 21: Airbag-Steuergerät
- 22: Abgabevorrichtung eines eCalls
- 23: HMI
- 24: BCM
- 25: Lichtsteuergerät
- 26: Beleuchtungseinrichtung
- 27: Außenbeleuchtung
- 28: Innenbeleuchtung

## Patentansprüche

1. Verfahren zur Abgabe eines Hilfesignals mit einer Beleuchtungseinrichtung (26) eines Beförderungsmittels, das eine Beleuchtungssteuerung (16), eine Einrichtung zur Erkennung einer Notfallsituation und eine Triggervorrichtung (17) aufweist, die nach einer registrierten Notfallsituation ein Triggersignal erzeugt, wobei die Beleuchtungssteuerung (16) nach dem Empfang des Triggersignals die Beleuchtungseinrichtung (26) derart steuert, dass die Beleuchtungseinrichtung in Form eines Notfallsignals blinkt, wobei die Beleuchtungseinrichtung des Beförderungsmittels eine Innenbeleuchtung (28) und eine Außenbeleuchtung (27) aufweist, die jeweils mehrere Beleuchtungselemente besitzen, **dadurch gekennzeichnet, dass** zur Abgabe des Notfallsignals
a) alle oder nur eine Teilmenge der Außenbeleuchtungselemente und
b) alle oder nur eine Teilmenge der Innenbeleuchtungselemente angesteuert wird, wobei bei der Abgabe des Notfallsignals alle blinkenden Beleuchtungselemente der Beleuchtungseinrichtung (26) synchron blinken.

2. Verfahren nach Anspruch 1, **dadurch gekennzeichnet, dass** das Beförderungsmittel ein Personenkraftwagen (1), ein Bus, ein Lastkraftwagen, ein Zug, ein Schiff, ein Flugzeug oder ein Hubschrauber ist.

3. Verfahren nach Anspruch 2, **dadurch gekennzeichnet, dass** die Außenbeleuchtungselemente Blinker (2), Abblendlicht (3), Fernlicht (4), Bremslicht (5), Seiten- und Begrenzungsleuchten, Rückfahrscheinwerfer (6), Nebelscheinwerfer (7), Nebelschlussleuchte (8), Standlicht (9), Tagfahrlicht (10), Kurvenlicht (11), und/oder Kennzeichenbeleuchtung (12) sind.

4. Verfahren nach Anspruch 1, **dadurch gekennzeichnet, dass** die Innenbeleuchtungselemente eine Innenraumbeleuchtung (13), eine Ambientebeleuchtung (14), ein Infotainmentdisplay und/oder eine Instrumentenbeleuchtung (15) sind.

5. Verfahren nach einem der Ansprüche 1 bis 4, **gekennzeichnet durch** eine Fernlichtsteuerung, die die Abgabe des Notfallsignals mittels des Fernlichts blockiert, wenn ein sich nährendes Fahrzeug registriert wird.

6. Verfahren nach einem der Ansprüche 1 bis 5, **dadurch gekennzeichnet, dass** vor der Abgabe des Hilfesignals eine beförderungsmittelinterne Warnmeldung abgegeben wird, die dem Fahrer die bevorstehende Abgabe des Hilfesignals anzeigt, wobei der Fahrer mittels einer Eingabevorrichtung die Abgabe des Hilfesignals freigeben oder blockieren kann.

7. Verfahren nach einem der Ansprüche 1 bis 6, **dadurch gekennzeichnet, dass** die Triggervorrichtung (17) zur Erzeugung des Triggersignals mit einer Auslösevorrichtung eines Rückhaltesystems und/oder dem Emergency-Assist-System des Beförderungsmittels und/oder einem eCall gekoppelt ist.

## Claims

1. Method for emitting an assistance signal using a lighting device (26) of a means of transport which has a lighting controller (16), a device for detecting an emergency situation, and a trigger apparatus (17) which generates a trigger signal after an emergency situation is registered, the lighting controller (16) controlling the lighting device (26) after receiving the trigger signal such that the lighting device flashes in the form of an emergency signal, the lighting device of the means of transport having interior lighting (28) and exterior lighting (27), each of which has a plurality of lighting elements, **characterized in that** in order to emit the emergency signal,
a) all or only a subset of the exterior lighting elements are actuated and
b) all or only a subset of the interior lighting elements are actuated, all flashing lighting elements of the lighting device (26) flashing synchronously when the emergency signal is emitted.

2. Method according to claim 1, **characterized in that** the means of transport is a passenger car(1), a bus, a truck, a train, a ship, an airplane or a helicopter.

3. Method according to claim 2, **characterized in that** the exterior lighting elements are turn signals (2), low beams (3), high beams (4), brake lights (5), side and marker lights, reversing lights (6), front fog lights (7), rear fog lights (8), parking lights (9), daytime running lights (10), cornering lights (11), and/or license plate lights (12).

4. Method according to claim 1, **characterized in that** the interior lighting elements are interior lights (13), ambient lights (14), an infotainment display and/or a dashboard light (15).

5. Method according to any of claims 1 to 4, **characterized by** a high beam controller which blocks the emission of the emergency signal via the high beams when an approaching vehicle is registered.

6. Method according to any of claims 1 to 5, **characterized in that** before the assistance signal is emitted, a warning message inside the means of transport is emitted, indicating the impending emission of the assistance signal to the driver, the driver being able to enable or block the emission of the assistance signal by means of an input apparatus.

7. Method according to any of claims 1 to 6, **characterized in that** the trigger apparatus (17) for generating the trigger signal is coupled with a release apparatus of a restraint system and/or the emergency assist system of the means of transport and/or an eCall.

## Revendications

1. Procédé d'émission d'un signal d'aide avec un dispositif d'éclairage (26) d'un moyen de transport, qui présente une commande d'éclairage (16), un dispositif de reconnaissance d'une situation d'urgence et un équipement de déclenchement (17), qui génère un signal de déclenchement après une situation d'urgence détectée, dans lequel la commande d'éclairage (16), après réception du signal de déclenchement, commande le dispositif d'éclairage (26) de telle sorte que le dispositif d'éclairage clignote sous la forme d'un signal d'urgence, dans lequel le dispositif d'éclairage du moyen de transport présente un éclairage intérieur (28) et un éclairage extérieur (27), qui possèdent respectivement plusieurs éléments d'éclairage, **caractérisé en ce que,** pour l'émission du signal d'urgence
a) tous les éléments d'éclairage extérieur ou seulement un sous-ensemble de ceux-ci et
b) tous les éléments d'éclairage intérieur ou seulement un sous-ensemble de ceux-ci sont commandés, dans lequel tous les éléments d'éclairage clignotants du dispositif d'éclairage (26) clignotent de manière synchrone lors de l'émission du signal d'urgence.

2. Procédé selon la revendication 1, **caractérisé en ce que** le moyen de transport est une voiture(I), un bus, un camion, un train, un bateau, un avion ou un hélicoptère.

3. Procédé selon la revendication 2, **caractérisé en ce que** les éléments d'éclairage extérieur sont des clignotants (2), des feux de croisement (3), des feux de route (4), des feux de stop (5), des feux latéraux et de position, des feux de recul (6), des feux de brouillard (7), des feux de brouillard arrière (8), des feux de stationnement (9), des feux de jour (10), des feux de virage (11), et/ou un éclairage de plaque d'immatriculation (12).

4. Procédé selon la revendication 1, **caractérisé en ce que** les éléments d'éclairage intérieur sont un éclairage intérieur (13), un éclairage d'ambiance (14), un affichage d'infodivertissement et/ou un éclairage de tableau de bord (15).

5. Procédé selon l'une des revendications 1 à 4, **caractérisé par** une commande de feux de route, qui bloque l'émission du signal d'urgence par le biais des feux de route lorsqu'un véhicule en approche est détecté.

6. Procédé selon l'une des revendications 1 à 5, **caractérisé en ce qu'**avant l'émission du signal d'aide, un message d'avertissement interne au moyen de transport est émis, qui indique au conducteur l'émission imminente du signal d'aide, dans lequel le conducteur peut autoriser ou bloquer l'émission du signal d'aide par le biais d'un équipement de saisie.

7. Procédé selon l'une des revendications 1 à 6, **caractérisé en ce que** l'équipement de déclenchement (17) est couplé, pour la génération du signal de déclenchement, à un équipement de déverrouillage d'un système de retenue et/ou au système d'assistance d'urgence du moyen de transport et/ou à un eCall.
